# FASCICULE DE BREVET EUROPEEN

(11) **EP 3 390 028 B1**
(45) Date de publication et mention de la délivrance du brevet: **04.12.2019**
(21) Numéro de dépôt: 16806160.4
(22) Date de dépôt: 07.12.2016
(51) Int. Cl.: B29D 30/06, B29C 33/38

(54) **LAMELLES DE GARNITURE POUR MOULE DE PNEUMATIQUE ET PROCÉDÉ DE FABRICATION ASSOCIÉ**
LAMELLEN ZUM AUSKLEIDEN EINER REIFENFORM UND ZUGEHÖRIGES HERSTELLUNGSVERFAHREN
SIPES FOR LINING A TYRE MOULD AND ASSOCIATED MANUFACTURING METHOD

(30) Priorité: 18.12.2015 FR 1562816
(43) Date de publication de la demande: 24.10.2018
(73) Titulaire: Compagnie Générale des Etablissements Michelin, 63000 Clermont-Ferrand (FR)
(72) Inventeur: CHALAND, Stéphane, 63040 Clermont-ferrand Cedex 09 (FR)
(74) Mandataire: Roussy, Delphine
(86) Numéro de dépôt international: PCT/EP2016/080075
(87) Numéro de publication internationale: WO 2017/102499

(56) Documents cités:
- JP-A- 2000 238 514
- US-A1- 2002 134 202

## Description

La présente invention concerne un élément de garniture composite qui est destiné à être utilisé dans un moule de cuisson ou vulcanisation pour pneumatique de véhicule, et notamment dans un moule du type à secteurs.

Un moule à secteurs comprend principalement deux coquilles latérales assurant chacune le moulage d'un des flancs latéraux du pneumatique, et une pluralité de secteurs assurant le moulage de la bande de roulement dudit pneumatique et mobiles radialement entre une position d'ouverture et une position de fermeture du moule. Les coquilles et les secteurs définissent un espace intérieur de moulage destiné à être mis en contact avec l'ébauche du pneumatique non vulcanisée.

Pour former des découpures ou sculptures de la bande de roulement du pneumatique, les secteurs du moule comprennent notamment des lamelles de garniture s'étendant en saillie dans l'espace intérieur de moulage. Ces lamelles forment un négatif des sculptures à mouler dans la bande de roulement du pneumatique.

Classiquement, ces lamelles de garniture sont formées par découpe et emboutissage ou frappe d'un flanc de tôle. Toutefois, ces procédés de fabrication sont seulement adaptés à l'obtention de lamelles présentant une épaisseur inférieure ou égale à 2 millimètres, par exemple celles utilisées pour le moulage de pneumatiques pour véhicule de tourisme.

Or, il existe un besoin de fabriquer des lamelles de garniture ayant des épaisseurs supérieures, par exemple pour le moulage de pneumatiques pour engins de génie civil.

Dans ce but, il est envisageable de réaliser des lamelles de garniture venues de matière avec le secteur associé du moule. Toutefois, cette solution nécessite l'usinage d'un bloc de matière massif, ce qui est particulièrement coûteux. En outre, l'espace séparant deux lamelles de garniture adjacentes peut ne pas être suffisamment large pour permettre le passage de l'outil

Le document US 2002/0134202 - A divulgue des éléments de garniture composite pour moule de pneumatique, notamment des lamelles composites, comprenant des premier et deuxième corps (101, 201) aptes à mouler au moins en partie une même sculpture dans une bande de roulement du pneumatique, et des moyens d'assemblage des premier et deuxième corps, à savoir en utilisant un adhésif ou par soudage.

La présente invention vise à remédier à ces inconvénients. L'invention concerne un élément de garniture composite pour moule de pneumatique comprenant des premier et deuxième corps aptes à mouler au moins en partie une même sculpture dans une bande de roulement du pneumatique et délimitant chacun une surface extérieure de moulage et une surface intérieure opposée.

L'élément de garniture composite comprend en outre au moins un moyen d'assemblage des premier et deuxième corps, les surfaces intérieures desdits corps étant maintenues par ledit moyen d'assemblage au moins localement dans une position écartée dans laquelle est aménagé un espace intérieur entre lesdites surfaces intérieures.

Par « moule », on entend un ensemble d'éléments séparés qui, par rapprochement relatif, permettent de délimiter un espace intérieur de moulage.

Par « pneumatique », on entend tous les types de bandages élastiques soumis ou non à une pression interne.

On entend par « élément de garniture », un élément destiné à permettre le moulage de tout ou partie d'une découpure ou sculpture dans la bande de roulement du pneumatique.

Par « sculpture » dans la bande de roulement, on entend l'espace délimité par des parois de matière qui s'étendent à partir de la surface de roulement destinée à entrer en contact avec la chaussée, qui se font face et qui sont distantes l'une de l'autre d'une distance non nulle. Une sculpture peut par exemple se présenter sous la forme d'une rainure ou d'une incision dans la bande de roulement. On parle alors de cordon ou de lamelle pour qualifier l'élément de garniture.

L'utilisation de deux corps distincts et assemblés en étant au moins en partie écartés l'un par rapport à l'autre permet d'obtenir de façon simple et économique un élément de garniture présentant une épaisseur supérieure à celles des éléments de garniture de l'état de la technique.

L'élément de garniture ainsi obtenu n'est pas un élément massif réalisé dans une seule pièce mais est au contraire obtenu par assemblage de plusieurs parties pour obtenir l'épaisseur désirée. L'élément de garniture ne présente pas de zones massives superflues, ce qui facilite sa fabrication. Il reste ainsi possible de fabriquer les corps de l'élément de garniture par des procédés de mise en œuvre à faible coût, par exemple des procédés de mise en œuvre à froid tels que l'emboutissage ou la frappe. Par ailleurs, l'épaisseur de chacun des éléments constituant l'élément de garniture peut être aisément adaptée selon l'épaisseur globale souhaitée de cet élément.

La structure particulière de l'élément de garniture permet de pouvoir prévoir un moyen d'assemblage conformé et disposé sur les premier et deuxième corps pour laisser subsister l'espace intérieur précité entre les surfaces intérieures de ces corps. L'espace intérieur est ainsi délimité par ledit moyen d'espacement et par les surfaces intérieures des corps. Avec une telle configuration, l'écartement entre une partie des surfaces intérieures des corps ou la totalité desdites surfaces est obtenu par le moyen d'assemblage. Dans cette configuration, le moyen d'assemblage réalise une double fonction, à savoir obtenir l'espacement des corps et assurer leur assemblage.

Alternativement, avec la structure particulière de l'élément de garniture, il est possible de prévoir une configuration dans laquelle l'espace intérieur précité est délimité uniquement par les surfaces intérieures des premier et deuxième corps.

Selon une autre caractéristique optionnelle, ledit moyen d'assemblage peut coopérer avec des portions d'extrémité des premier et deuxième corps. Ledit moyen d'assemblage peut s'étendre au moins en partie transversalement par rapport aux premier et deuxième corps.

Dans un mode de réalisation, ledit moyen d'assemblage est interposé au moins en partie entre les surfaces intérieures des premier et deuxième corps. Dans ce cas, il est possible de prévoir que ces surfaces intérieures sont en contact uniquement par l'intermédiaire dudit moyen d'assemblage.

Dans un mode de réalisation préférentiel, ledit moyen d'assemblage comprend au moins un cadre périphérique interposé entre les surfaces intérieures des premier et deuxième corps. Un tel cadre intermédiaire permet d'assurer un assemblage précis des premier et deuxième corps. L'élément de garniture présente ainsi une structure sandwich obtenu par empilage des premier et deuxième corps et du cadre intermédiaire. Le bord périphérique extérieur du cadre intermédiaire peut être de forme identique à celle des bords périphériques extérieurs des corps et venir effleurer avec ces bords.

A titre indicatif, l'épaisseur de chaque corps peut être comprise entre 1 et 2 millimètres et l'épaisseur du cadre intermédiaire peut être comprise entre 2 et 4 millimètres. Selon l'épaisseur globale souhaitée de l'élément de garniture, il est possible de prévoir plusieurs cadres intermédiaires interposés entre les premier et deuxième corps.

Dans une variante de réalisation, le moyen d'assemblage peut comprendre au moins deux languettes en regard et prolongeant chacune une des surfaces intérieures d'un des premier et deuxième corps et venant en appui contre l'autre corps. Chaque languette peut être venue de matière avec ledit corps, i.e. réalisée monobloc. Dans ce cas, les languettes peuvent être obtenues par pliage du ou des corps. Alternativement, chaque languette peut être un élément distinct du corps associé et rapporté sur ledit corps.

La fixation du moyen d'assemblage et des corps de l'élément de garniture peut être réalisée par tout moyen approprié, par exemple par soudage, collage, bridage, goupillage, etc.

Dans un mode de réalisation, au moins une matière synthétique remplit ledit espace intérieur. Cette matière de remplissage permet de remplir ledit espace libre intérieur afin d'éviter des problèmes d'isolation ou de dilatation d'air sous l'effet de la température lors du moulage de la bande de roulement du pneumatique. Cette matière peut présenter une conductivité thermique sensiblement égale à la conductivité thermique du matériau des premier et deuxième corps.

En outre, la matière de remplissage permet de rigidifier l'élément de garniture, ce qui limite le risque de déformation sous la pression de l'ébauche du pneumatique non vulcanisée. A titre indicatif, la matière de remplissage peut par exemple être un alliage fusible à bas point de fusion à base d'étain et de bismuth, tel que du Cerrocast®.

De préférence, les premier et deuxième corps sont identiques entre eux. Ainsi, il est possible d'utiliser le même outillage pour la fabrication des corps. Alternativement, il est possible de prévoir des premier et deuxième corps de formes différentes, par exemple de formes asymétriques, en dents de scie, etc. Les corps peuvent avoir une forme ondulée ou rectiligne ou courbe.

L'invention concerne également un procédé de fabrication d'un élément de garniture composite pour moule de pneumatique comprenant les étapes suivantes:
- a) opérations de formage à froid pour l'obtention de premier et deuxième corps aptes à mouler au moins en partie une même sculpture dans une bande de roulement du pneumatique, puis
- b) assemblage desdits premier et deuxième corps par l'intermédiaire d'au moins moyen d'assemblage maintenant au moins localement des surfaces intérieures desdits corps dans une position écartée aménageant un espace intérieur

La présente invention sera mieux comprise à la lecture de la description détaillée de modes de réalisation pris à titre d'exemples nullement limitatifs et illustrés par les dessins annexés sur lesquels :
- la figure 1 est une vue en perspective éclatée d'un élément de garniture selon un premier exemple de réalisation,
- la figure 2 est une vue en coupe de l'élément de garniture de la figure 1 en position assemblée,
- la figure 3 est une vue en perspective éclatée d'un élément de garniture selon un deuxième exemple de réalisation,
- la figure 4 est une vue en coupe de l'élément de garniture de la figure 2 en position assemblée,
- la figure 5 est une vue en perspective d'un élément de garniture selon un troisième exemple de réalisation, et
- les figures 6 et 7 sont des vues de dessus partielles illustrant un secteur de moule comprenant des éléments de garniture selon un quatrième exemple de réalisation.

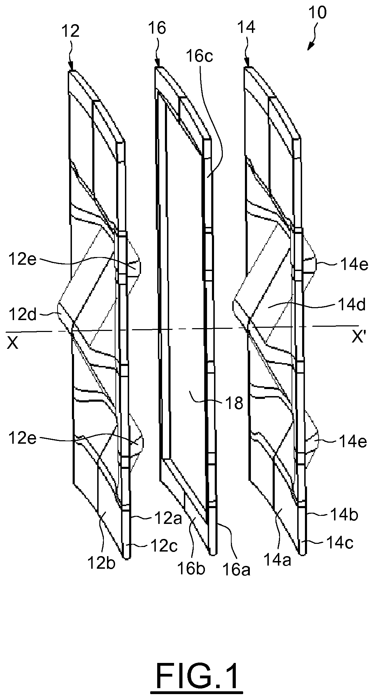

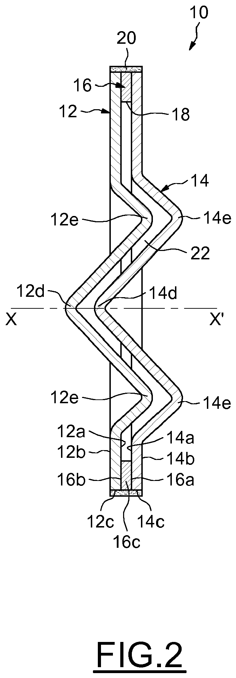

Sur les figures 1 et 2 est représentée une lamelle 10 de garniture composite prévue pour être utilisée dans un moule de cuisson ou vulcanisation pour pneumatiques afin de former des sculptures dans la bande de roulement de ces pneumatiques.

La lamelle 10 est obtenue par l'assemblage de premier et deuxième corps 12, 14 et d'un cadre 16 intermédiaire d'espacement interposé entre lesdits corps.

Sur la figure 1, les corps 12, 14 et le cadre 16 constituant la lamelle 10 composite sont représentés en perspective éclatée pour des raisons de clarté. La lamelle 10 est obtenue par empilage des corps 12, 14 et du cadre 16 qui viennent en appui l'un contre l'autre selon un axe X-X' d'empilage comme cela est illustré à la figure 2. L'axe X-X' s'étend selon une direction supposée horizontale.

Dans l'exemple de réalisation illustré, les corps 12, 14 étant identiques entre eux, on décrit ici uniquement l'un d'entre eux portant la référence 12, étant entendu que les éléments identiques de l'autre corps portent la référence 14.

Le corps 12 comprend une surface frontale 12a intérieure et une surface frontale 12b extérieure opposée délimitant l'épaisseur dudit corps. La surface frontale 12a intérieure vient en appui contre le cadre 16. La surface frontale 12a intérieure forme une surface de positionnement du corps 12 contre le cadre 16. La surface frontale 12b extérieure forme une surface de moulage destinée à mouler tout ou partie d'une sculpture dans la bande de roulement du pneumatique. Le corps 12 comprend également un bord périphérique 12c extérieur se raccordant aux surfaces frontales 12a, 12b.

Le corps 12 comprend encore des protubérances 12d, 12e venues de matière avec ledit corps. La protubérance 12d s'étend en saillie par rapport à la surface frontale 12b extérieure et forme sur la surface frontale 12a extérieure une zone en creux. Les protubérances 12e s'étendent en saillie par rapport à la surface frontale 12a intérieure et forment sur la surface frontale 12b extérieure des zones en creux. Les protubérances 12e sont disposées ici de part et d'autre de la protubérance 12d.

Le cadre 16 vient en appui d'un côté contre le corps 12 et de l'autre côté contre le corps 14. Il n'existe aucun contact direct entre les deux corps 12, 14. Les corps 12, 14 sont maintenus écartés l'un de l'autre par l'intermédiaire du cadre 16. En d'autres termes, les corps 12, 14 sont en contact uniquement par l'intermédiaire du cadre 16.

Le cadre 16 comprend des surfaces frontales 16a, 16b opposées délimitant l'épaisseur dudit cadre. La surface frontale 16a du cadre est en appui contre la surface frontale 14a intérieure du corps 14 tandis que la surface frontale 16b est en appui contre la surface frontale 12a intérieure du corps 12. Le cadre 16 est interposé entre les surfaces frontales 12a, 14a intérieures des corps.

Le cadre 16 comprend également un bord périphérique 16c extérieur se raccordant aux surfaces frontales 16a, 16b. Le bord périphérique 16c est de forme identique à celui des bords 12c, 14c des corps et vient affleurer avec lesdits bords.

Le cadre 16 comprend encore un évidement 18 central traversant. L'évidement 18 s'étend dans l'épaisseur du cadre et débouche sur les surfaces frontales 16a, 16b. L'évidement 18 est dimensionné de sorte à permettre le passage des protubérances 12e et 14d des corps. Les protubérances 12e du corps 12 s'étendent à travers l'évidement 18 et viennent se loger sans contact dans les zones en creux complémentaires formées sur la surface frontale 14a intérieure du corps 14 par les protubérances 14e. De façon similaire, la protubérance 14d du corps 14 s'étend à travers l'évidement 18 et vient se loger sans contact dans la zone en creux complémentaire formée sur la surface frontale 12a intérieure du corps 12 par la protubérance 12d. Dans l'exemple de réalisation illustré, compte tenu de la dimension de l'évidement 18, le cadre 16 vient appui contre les surfaces frontales 12a, 14a intérieures des corps uniquement dans des portions d'extrémité desdites surfaces situées au voisinage immédiat des bords périphériques 12c, 14c.

Pour réaliser la fixation du cadre 16 et des corps 12 et 14, la lamelle 10 comprend encore un cordon de soudure 20 périphérique recouvrant les bords périphériques 12c, 14c et 16c. Alternativement, la fixation des composants de la lamelle 10 pourrait être réalisée par tout autre moyen approprié, par exemple collage, bridage, goupillage, etc.

Comme indiqué précédemment, le cadre 16 est interposé entre les surfaces frontales 12a, 14a intérieures des corps 12, 14 en vis-à-vis. Ainsi, on assure le maintien en position écartée de ces surfaces frontales 12a, 14a. Dans cette position écartée, un espace 22 intérieur est aménagé entre les surfaces frontales 12a, 14a intérieures des corps. Il n'existe aucun contact direct entre les deux surfaces frontales 12a, 14a. L'espace 22 intérieur est délimité par le bord de l'évidement 18 du cadre et par les surfaces frontales 12a, 14a des corps. L'espace 22 intérieur est fermé, i.e. non accessible depuis l'extérieur de la lamelle 10.

La disposition du cadre 16 formant entretoise entre les corps 12, 14 permet d'obtenir une lamelle 10 de garniture présentant une épaisseur adaptée pour le moulage de pneumatiques pour engins de génie civil, tout en étant constituée par assemblage de plusieurs pièces distinctes pouvant être fabriquées à faible coût. Par exemple, les corps 12, 14 sont avantageusement formés à partir d'un flanc de tôle par des procédés de mise en œuvre à froid, tels que l'emboutissage ou la frappe. Le cadre 16 peut également être formé par de tels procédés. En plus d'assurer l'écartement des deux corps 12 et 14, le cadre 16 permet d'obtenir un positionnement et un assemblage précis de ces corps l'un par rapport à l'autre.

Bien que la conception illustrée aux figures 1 et 2 est particulièrement avantageuse, la présente invention n'est pas limitée à une lamelle 10 de garniture comprenant un cadre 16 intermédiaire pour réaliser la jonction entre les corps 14, 16 et pour maintenir en position écartée les surfaces frontales 12a, 14a intérieures de ces corps.

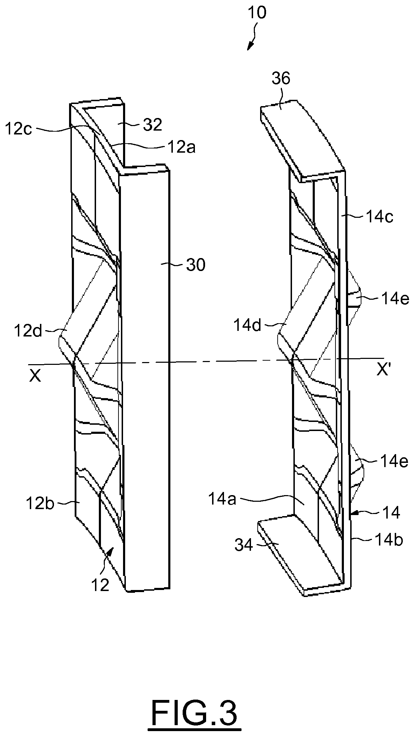

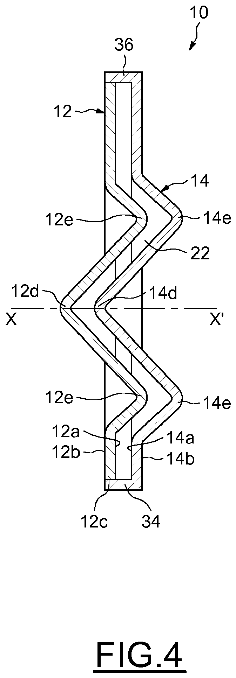

Dans l'exemple de réalisation illustré aux figures 3 et 4, sur lesquelles les éléments identiques portent les mêmes références, la lamelle 10 composite comprend des languettes 30 à 36 formées sur les corps 12, 14 pour assurer l'écartement des surfaces frontales 12a, 14a intérieures des corps 12, 14.

Dans cet exemple, les languettes 30, 32 et 34, 36 sont respectivement venues de matière avec les corps 12 et 14. Ces languettes peuvent par exemple être obtenues par pliage des corps. Les languettes 30, 32 s'étendent à partir de côtés opposés longitudinaux du bord périphérique 12c du corps 12 et prolongent la surface frontale 12a intérieure en direction du corps 14. Les languettes 30, 32 sont identiques et en regard. Les languettes 30, 32 s'étendent transversalement à l'axe X-X'. Les languettes 34, 36 s'étendent à partir de côtés opposés transversaux du bord périphérique 14c du corps 14 et prolongent la surface frontale 14a intérieure en direction du corps 12. Les languettes 34, 36 sont identiques et en regard. Les languettes 34, 36 s'étendent parallèlement à l'axe X-X'.

Les languettes 30, 32 et 34, 36 sont conformées de sorte à obtenir l'assemblage de la lamelle 10 par emboîtement. Dans la position assemblée de la lamelle 10, les languettes 30, 32 sont en appui contre les côtés longitudinaux opposés du bord périphérique 14c du corps et les bords adjacents des languettes 34, 36. Ces languettes 34, 36 viennent en appui contre les côtés transversaux opposés du bord périphérique 12c du corps 12 et les bords adjacents des languettes 30, 32. Pour réaliser l'assemblage des corps 12 et 14, il est possible de souder entre elles les languettes 30 à 36.

En variante, il pourrait être possible de prévoir une disposition différente des languettes 30 à 36 sur les corps 12, 14 de celle illustrée. Par exemple, il est envisageable de disposer les languettes 30, 34 sur le corps 12 et les languettes 32, 36 sur le corps 14. Alternativement, les languettes 30 à 36 pourraient être prévues sur un seul des deux corps 12, 14. Dans une autre variante, les languettes pourraient être décalées de sorte à être interposées entre les surfaces frontales 12a, 14a intérieures des corps 12, 14.

De façon analogue au premier exemple de réalisation décrit précédemment, dans la position assemblée de la lamelle 10, l'espace 22 intérieur est aménagé entre les surfaces frontales 12a, 14a intérieures des corps. Il n'existe aucun contact direct entre les deux surfaces frontales 12a, 14a. Dans cet exemple de réalisation, l'espace 22 intérieur est délimité et fermé par les languettes 30 à 36 et par les surfaces frontales 12a, 14a du corps.

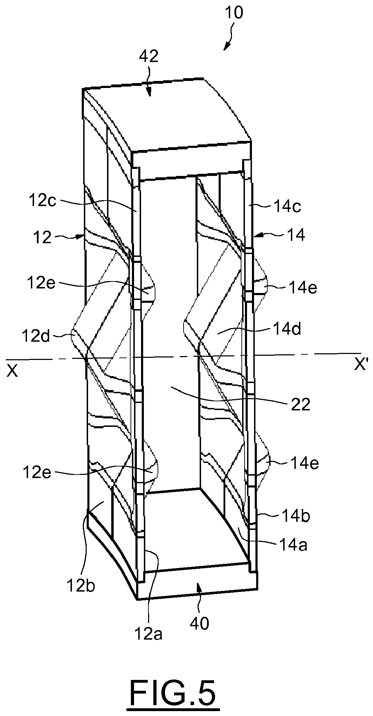

L'exemple de réalisation illustré à la figure 5, sur laquelle les éléments identiques portent les mêmes références, diffère du premier exemple de réalisation décrit en ce que la lamelle 10 composite comprend, en remplacement du cadre intermédiaire, deux embases 40, 42 montées aux extrémités longitudinales des corps 12, 14. Une telle configuration est par exemple adaptée pour obtenir une lamelle 10 présentant une épaisseur globale supérieure à celle du premier exemple de réalisation sans qu'il soit nécessaire d'empiler plusieurs cadres intermédiaires entre les deux corps 12, 14.

Chaque embase 40, 42 vient en appui d'un côté contre le corps 12 et de l'autre côté contre le corps 14. Les corps 12, 14 sont maintenus écartés l'un de l'autre par l'intermédiaire des embases 40, 42. Chaque embase 40, 42 vient en appui d'un côté contre la surface frontale 12a intérieure du corps 12 et de l'autre côté contre la surface frontale 14a intérieure du corps 14. Chaque embase 40, 42 est interposée entre les surfaces frontales 12a, 14a intérieures des corps et s'étend transversalement entre lesdites surfaces. Chaque embase 40, 42 recouvre également les côtés transversaux en vis-à-vis des bords périphériques 12c, 14d des corps. La fixation des embases 40, 42 sur les corps 12, 14 peut être réalisée par tout moyen approprié, par exemple par soudage.

Dans l'exemple de réalisation illustré à la figure 5, l'espace 22 intérieur délimité par les embases 40, 42 et par les surfaces frontales 12a, 14a du corps est ouvert latéralement de part et d'autre. De sorte à fermer entièrement cet espace 22 depuis l'extérieur, chaque lamelle 10 peut comprendre encore deux plaques d'assemblage (non représentées) formant chapeaux rapportés sur les corps 12, 14 et sur les embases 40, 42.

Après fabrication, la lamelle 10 de garniture peut être fixée sur un des secteurs du moule associé, par ancrage. Une zone d'ancrage latérale de la lamelle 10 se trouve entièrement noyée à l'intérieur du secteur du moule. Ainsi, en variante de l'exemple de réalisation de la figure 5, il pourrait être possible de prévoir une conception de la lamelle comprenant une seule plaque d'assemblage de sorte à laisser l'espace intérieur ouvert latéralement du côté de cette zone d'ancrage qui est destinée à être entièrement noyée à l'intérieur du secteur du moule.

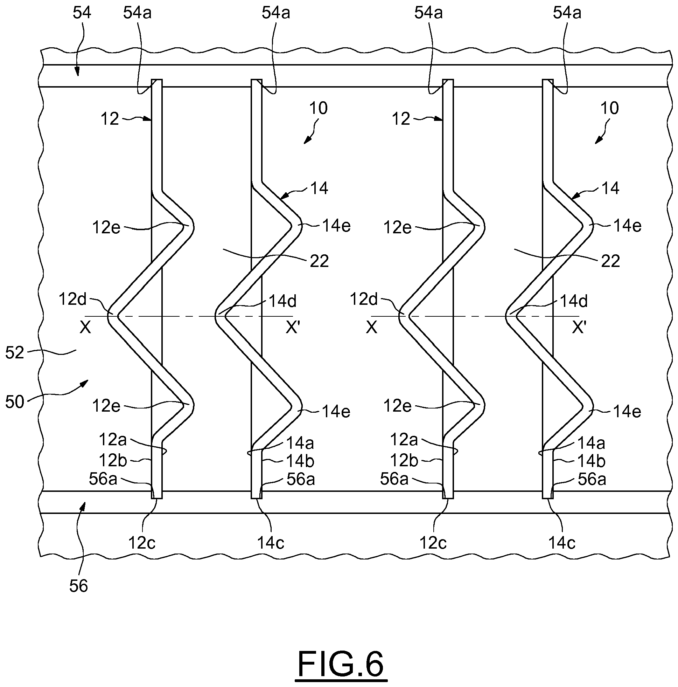

Sur la figure 6 est représenté partiellement un secteur 50 de moule de fabrication sur lequel sont montées des lamelles 10 composites. Par rapport à l'exemple de réalisation précédent, les lamelles 10 de cet exemple sont dépourvues d'embases de support. Chaque lamelle 10 comprend une plaque d'assemblage (non représentée) formant chapeau fermant latéralement d'un côté l'espace intérieur 22 délimité entre les surfaces intérieures 12a, 14a des corps. Chaque plaque d'assemblage d'une lamelle est montée en appui contre un des côtés longitudinaux du bord périphérique de chaque corps 12, 14 de ladite lamelle. Les corps 12, 14 sont fixés sur la plaque d'assemblage par tout moyen approprié, par exemple par soudage. La plaque d'assemblage assure le maintien en position écartée des surfaces intérieures 12a, 14a des corps. La plaque d'assemblage peut être plane. La plaque d'assemblage peut également comprendre une portion en saillie interposée entres les surfaces frontales 12a, 14a intérieures des corps associés.

Le secteur 50 de moule comprend une surface de moulage 52 destinée à mouler en partie la surface de roulement du pneumatique à fabriquer. Le secteur 50 comprend ici deux cordons 54, 56 espacés et s'étendant en saillie par rapport à la surface de moulage 52. Les cordons 54, 56 sont destinés à mouler des rainures dans la bande de roulement du pneumatique. Les cordons 54, 56 sont parallèles entre eux.

Chaque lamelle 10 composite est fixée sur le secteur 50 par ancrage sur les cordons 54, 56. La lamelle 10 s'étend entre les cordons 54, 56. Chaque cordon 54, 56 comprend des fentes de réception 54a, 56a à l'intérieur desquelles les portions d'extrémité longitudinales des corps 12, 14 de chaque lamelle 10 sont ancrées, par exemple par emmanchement à force. Les corps 12, 14 de chaque lamelle 10 s'étendent perpendiculairement aux cordons 54, 56. Pour chaque lamelle 10, chaque côté longitudinal du bord périphérique de chaque corps 12, 14 laissé libre, i.e. sans plaque d'assemblage en appui, est monté contre la surface de moulage 52, ou ancrée à l'intérieur d'une fente associée ménagée sur cette surface. Dans la position fixée de la lamelle 10 sur le secteur 50, la plaque d'assemblage de la lamelle est disposée du côté opposé à la surface de moulage 52 par rapport au corps 12, 14.

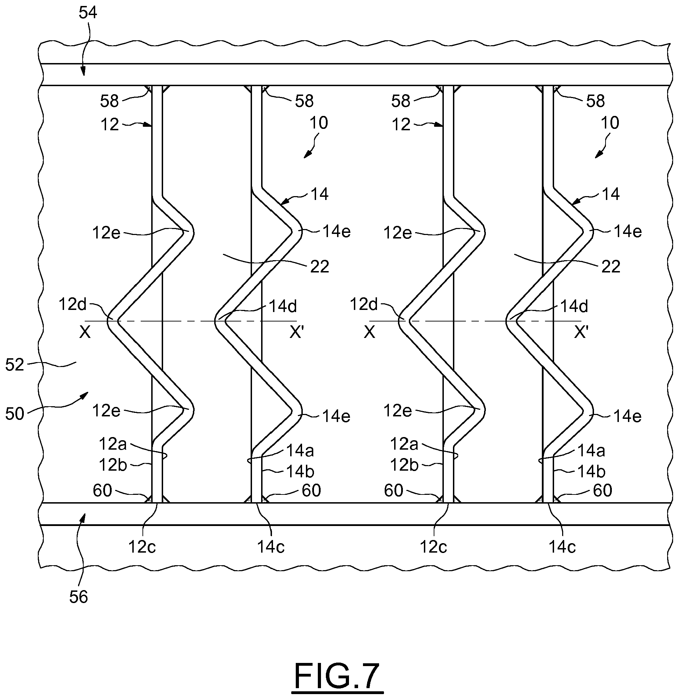

En variante, comme illustrée à la figure 7, sur laquelle les éléments identiques portent les mêmes références, les extrémités longitudinales des corps 12, 14 de chaque lamelle sont montées uniquement en appui contre les cordons 54, 56. Pour réaliser la fixation des corps 12 et 14 de chaque lamelle 10 sur les cordons 54, 56 du secteur, des cordons 58, 60 de soudure sont prévus. Alternativement, la fixation de chaque lamelle 10 sur les cordons 54, 56 pourrait être réalisée par tout autre moyen approprié, par exemple collage.

Dans une autre variante, chaque lamelle 10 composite pourrait être fixée sur un seul cordon du secteur de moule. Dans ce cas, chaque lamelle 10 peut comprendre, du côté opposé à ce cordon, une embase de support 40, 42 telle qu'illustrée au mode de réalisation de la figure 5, ou encore une languette 34, 36 telle qu'illustrée au mode de réalisation des figures 3 et 4.

Dans les exemples de réalisation illustrés, les corps 12, 14 de la lamelle sont assemblés en étant complètement écartés l'un par rapport à l'autre. En variante, il pourrait être possible de prévoir une conception différente de la lamelle de sorte que, dans la zone d'ancrage destinée à être insérée à l'intérieur du secteur associé du moule, les corps 12, 14 sont montés en appui l'un contre l'autre. Ainsi, avec une telle conception, les corps 12, 14 sont maintenus écartés uniquement dans la zone de la lamelle destinée à s'étendre en saillie dans l'espace intérieur de moulage du moule.

Dans les exemples de réalisation illustrés, l'espace 22 intérieur aménagé dans la position écartée des corps 12, 14 de la lamelle est laissé vide. Alternativement, il pourrait être possible de remplir cet espace de la lamelle avec une matière de remplissage, par exemple un alliage fusible à bas point de fusion, afin d'éviter des problèmes d'isolation ou de dilatation d'air sous l'effet de la température lors du moulage de la bande de roulement du pneumatique.

Dans les exemples de réalisation illustrés, les deux corps de la lamelle composite présentent des protubérances permettant de former au moins en partie une même sculpture dans la bande de roulement du pneumatique. La forme et/ou le profil des corps de la lamelle illustrés sur les figures sont nullement limitatifs et peuvent être adaptés selon le dessin de sculpture souhaité.

L'invention a été décrite sur la base d'une lamelle de garniture permettant de former une incision dans la bande de roulement du pneumatique moulé. En variante, l'invention peut également être appliquée à un autre type d'élément de garniture destiné à être rapporté sur un bloc support du moule, par exemple un cordon.

## Revendications

1. Elément de garniture composite pour moule de pneumatique comprenant des premier et deuxième corps (12, 14) aptes à mouler au moins en partie une même sculpture dans une bande de roulement du pneumatique et délimitant chacun une surface extérieure (12b, 14b) de moulage et une surface intérieure (12a, 14a) opposée, ledit élément de garniture composite comprenant en outre au moins un moyen d'assemblage (16 ; 30 à 36 ; 40, 42) des premier et deuxième corps, **caractérisé en ce que**
les surfaces intérieures (12a, 14a) desdits corps étant maintenues par ledit moyen d'assemblage au moins localement dans une position écartée aménageant un espace intérieur (22).

2. Elément de garniture composite selon la revendication 1, dans lequel ledit moyen d'assemblage (16 ; 30 à 36 ; 40, 42) coopère avec des portions d'extrémité des premier et deuxième corps (12, 14).

3. Elément de garniture composite selon la revendication 1 ou 2, dans lequel ledit moyen d'assemblage (16 ; 30 à 36 ; 40, 42) s'étend au moins en partie transversalement par rapport aux premier et deuxième corps (12, 14).

4. Elément de garniture composite selon l'une quelconque des revendications précédentes, dans lequel ledit moyen d'assemblage (16 ; 30 à 36 ; 40, 42) est interposé au moins en partie entre les surfaces intérieures (12a, 14a) des premier et deuxième corps.

5. Elément de garniture composite selon l'une quelconque des revendications précédentes, dans lequel ledit moyen d'assemblage (16 ; 30 à 36 ; 40, 42) est conformé et disposé sur les premier et deuxième corps pour délimiter ledit espace intérieur conjointement avec les surfaces intérieures (12a, 14a) desdits corps.

6. Elément de garniture composite selon l'une quelconque des revendications précédentes, dans lequel ledit moyen d'assemblage comprend au moins un cadre périphérique (16) interposé entre les surfaces intérieures (12a, 14a) des premier et deuxième corps.

7. Elément de garniture composite selon l'une quelconque des revendications 1 à 5, dans lequel ledit moyen d'assemblage comprend au moins deux languettes (30 à 36) en regard et prolongeant chacune une des surfaces intérieures d'un des premier et deuxième corps et venant en appui contre l'autre corps.

8. Elément de garniture composite selon la revendication 7, dans lequel chaque languette est venue de matière avec ledit corps ou rapportée sur ledit corps.

9. Elément de garniture composite selon l'une quelconque des revendications 1 à 4, dans lequel ledit espace intérieur est délimité uniquement par les surfaces intérieures des premier et deuxième corps.

10. Elément de garniture composite selon l'une quelconque des revendications précédentes, comprenant au moins une matière synthétique remplissant ledit espace intérieur.

11. Elément de garniture composite selon l'une quelconque des revendications précédentes, dans lequel les premier et deuxième corps sont identiques entre eux.

12. Moule de pneumatique comprenant une pluralité d'éléments de garniture selon l'une quelconque des revendications précédentes.

13. Procédé de fabrication d'un élément de garniture composite pour moule de pneumatique selon la revendication 1, comprenant les étapes suivantes:
- a) opérations de formage à froid pour l'obtention de premier et deuxième corps aptes à mouler au moins en partie une même sculpture dans une bande de roulement du pneumatique, puis
- b) assemblage desdits premier et deuxième corps par l'intermédiaire d'au moins moyen d'assemblage maintenant au moins localement des surfaces intérieures desdits corps dans une position écartée aménageant un espace intérieur.

## Patentansprüche

1. Verbundauskleidungselement für eine Reifenform, umfassend einen ersten und einen zweiten Körper (12, 14), die dazu geeignet sind, zumindest teilweise ein gleiches Profil in einem Laufstreifen des Reifens zu formen, und die jeder eine Formaußenfläche (12b, 14b) und eine gegenüberliegende Innenfläche (12a, 14a) begrenzen, wobei das Verbundauskleidungselement ferner zumindest ein Mittel zum Zusammensetzen (16; 30 bis 36; 40, 42) des ersten und des zweiten Körpers umfasst, **dadurch gekennzeichnet, dass**
die Innenflächen (12a, 14a) der Körper durch das Zusammensetzungsmittel zumindest lokal in einer beabstandeten Position gehalten werden, die einen Innenraum (22) schafft.

2. Verbundauskleidungselement nach Anspruch 1, wobei das Zusammensetzungsmittel (16; 30 bis 36; 40, 42) mit Endabschnitten des ersten und des zweiten Körpers (12, 14) zusammenwirkt.

3. Verbundauskleidungselement nach Anspruch 1 oder 2, wobei sich das Zusammensetzungsmittel (16; 30 bis 36; 40, 42) zumindest teilweise quer zum ersten und zum zweiten Körper (12, 14) erstreckt.

4. Verbundauskleidungselement nach einem der vorangehenden Ansprüche, wobei das Zusammensetzungsmittel (16; 30 bis 36; 40, 42) zumindest teilweise zwischen den Innenflächen (12a, 14a) des ersten und des zweiten Körpers angeordnet ist.

5. Verbundauskleidungselement nach einem der vorangehenden Ansprüche, wobei das Zusammensetzungsmittel (16; 30 bis 36; 40, 42) angepasst und am ersten und zweiten Körper angeordnet ist, um zusammen mit den Innenflächen (12a, 14a) der Körper den Innenraum zu begrenzen.

6. Verbundauskleidungselement nach einem der vorangehenden Ansprüche, wobei das Zusammensetzungsmittel zumindest einen Umfangsrahmen (16) umfasst, der zwischen den Innenflächen (12a, 14a) des ersten und des zweiten Körpers angeordnet ist.

7. Verbundauskleidungselement nach einem der Ansprüche 1 bis 5, wobei das Zusammensetzungsmittel zumindest zwei Laschen (30 bis 36) umfasst, die jeweils einer der Innenflächen eines des ersten und des zweiten Körpers zugewandt sind und diese verlängern und gegen den anderen Körper zur Anlage kommen.

8. Verbundauskleidungselement nach Anspruch 7, wobei jede Lasche mit dem Körper einstückig ausgebildet oder am Körper angeordnet ist.

9. Verbundauskleidungselement nach einem der Ansprüche 1 bis 4, wobei der Innenraum ausschließlich durch die Innenflächen des ersten und des zweiten Körpers begrenzt ist.

10. Verbundauskleidungselement nach einem der vorangehenden Ansprüche, umfassend zumindest ein synthetisches Material, das den Innenraum füllt.

11. Verbundauskleidungselement nach einem der vorangehenden Ansprüche, wobei der erste und der zweite Körper miteinander identisch sind.

12. Reifenform, umfassend mehrere Auskleidungselemente nach einem der vorangehenden Ansprüche.

13. Verfahren zur Herstellung eines Verbundauskleidungselements für eine Reifenform nach Anspruch 1, umfassend die folgenden Schritte:
a) Kaltformvorgänge, um den ersten und den zweiten Körper zu erhalten, die dazu geeignet sind, zumindest teilweise ein gleiches Profil in einem Laufstreifen des Reifens zu formen, anschließend
b) Zusammensetzen des ersten und des zweiten Körpers mit Hilfe von zumindest einem Zusammensetzungsmittel, das die Innenflächen der Körper zumindest lokal in einer beabstandeten Position hält, die einen Innenraum schafft.

## Claims

1. Composite lining element for a tyre mould comprising first and second bodies (12, 14) which are able to mould, at least in part, the one same tread pattern in a tread of the tyre and each delimiting an exterior moulding surface (12b, 14b) and an opposite interior surface (12a, 14a), the said composite lining element further comprising at least a means (16; 30 to 36; 40, 42) of assembling the first and second bodies, **characterized in that** the interior surfaces (12a, 14a) of the said bodies being kept by the said assembly means at least locally in a separated position that creates an interior space (22).

2. Composite lining element according to Claim 1, in which the said means of assembly (16; 30 to 36; 40, 42) collaborates with end portions of the first and second bodies (12, 14).

3. Composite lining element according to Claim 1 or 2, in which the said means of assembly (16; 30 to 36; 40, 42) extends at least in part transversely with respect to the first and second bodies (12, 14).

4. Composite lining element according to any one of the preceding claims, in which the said means of assembly (16; 30 to 36; 40, 42) is interposed at least in part between the interior surfaces (12a, 14a) of the first and second bodies.

5. Composite lining element according to any one of the preceding claims, in which the said means of assembly (16; 30 to 36; 40, 42) is shaped and arranged on the first and second bodies in order to delimit the said interior space in conjunction with the interior surfaces (12a, 14a) of the said bodies.

6. Composite lining element according to any one of the preceding claims, in which the said means of assembly comprises at least one peripheral frame (16) interposed between the interior surfaces (12a, 14a) of the first and second bodies.

7. Composite lining element according to any one of Claims 1 to 5, in which the said means of assembly comprises at least two tongues (30 to 36) facing each other and each extending one of the interior surfaces of one of the first and second bodies and coming to bear against the other body.

8. Composite lining element according to Claim 7, in which each tongue is formed as one with the said body or attached to the said body.

9. Composite lining element according to any one of Claims 1 to 4, in which the said interior space is delimited only by the interior surfaces of the first and second bodies.

10. Composite lining element according to any one of the preceding claims, comprising at least one synthetic material filling the said interior space.

11. Composite lining element according to any one of the preceding claims, in which the first and second bodies are identical to one another.

12. Tyre mould comprising a plurality of lining elements according to any one of the preceding claims.

13. Method for manufacturing a composite lining element for a tyre mould, comprising the following steps:
- a) cold-forming operations to obtain first and second bodies which are able to mould, at least in part, the one same tread pattern in a tread of the tyre, then
- b) assembly of the said first and second bodies using at least a means of assembly that at least locally keeps interior surfaces of the said bodies in a separated position that creates an interior space.
